# EUROPÄISCHE PATENTANMELDUNG

(11) **EP 0 615 729 A1**
(43) Veröffentlichungstag der Anmeldung: **21.09.1994**
(21) Anmeldenummer: 94101568.7
(22) Anmeldetag: 02.02.1994
(51) Int. Cl.: A61C 1/05

(54) **Ärztliches, insbesondere zahnärztliches Instrument mit innen gekühltem Werkzeug**

(30) Priorität: 15.02.1993 DE 4304514
(71) Anmelder: SIEMENS AKTIENGESELLSCHAFT, D-80333 München (DE)
(72) Erfinder: Landgraf, Hermann, D-64653 Lorsch (DE)

(57) **Zusammenfassung**

Die Erfindung bezieht sich auf ein ärztliches, insbesondere zahnärzliches, Instrument, welches zur Aufnahme einer Spannvorrichtung (4) für ein innen gekühltes Werkzeug (2) geeignet ist. Um eine optimale Übergabe des Kühlmittels vom Zuleitungskanal auf den innen im Werkzeug verlaufenden Kanal zu gewährleisten, wird vorgeschlagen, daß sich die Austrittsöffnung (16) des Zuleitungskanals und die Eintrittsöffnung (17) des Werkzeuges an der Stirnseite berührungsfrei gegenüberstehen, wobei konzentrisch zum Zuleitungskanal des Kühlmittels ein weiterer Zuleitungskanal (13) vorgesehen ist, über den Druckluft mit einem gegenüber dem Kühlmittel höheren Druck zugeführt wird. Zwischen rotierenden Teilen (32, 33, 48) der Spannvorrichtung (4) am Schaftende des Werkzeuges und dem Zuleitungskanal (13) für Druckluft sind mit Druckluft beaufschlagbare, zur Abdichtung dienende Spalte (15, 19, 20; 30, 31; 36, 37) vorhanden.

## Beschreibung

Die Erfindung bezieht sich auf ein ärztliches, insbesondere zahnärztliches Instrument mit einer in einem Kopfgehäuse rotierbar gelagerten Hohlwelle zur Aufnahme einer Spannvorrichtung für ein innen gekühltes Werkzeug, welches einen Längskanal aufweist, wobei dem Längskanal ein Zuleitungskanal für ein Kühlmittel zugeordnet ist, dessen Austrittsöffnung der Eintrittsöffnung an der Stirnseite des Schaftes berührungsfrei gegenübersteht.

Bei einem bekannten solchen Instrument (EP-0 455 452) wird Kühlwasser im Freistrahl auf die Eintrittsöffnung des Werkzeuges geleitet. Außerdem wird ein Teil der Treibluft, die nach Durchströmen des Turbinenantriebs als Ab- oder Rückluft über einen Abluftkanal aus dem Instrument geführt wird, über Kugellager in einen Raum geleitet, in dem sich ein mit der Hohlwelle umlaufendes Pumpgehäuse befindet. Im Innern des Pumpgehäuses befinden sich schneckenartig geformte Leitflächen, welche die abgesaugte Abluft in den Kanal des Werkzeuges pumpen. Mit dieser Pumpeinrichtung wird somit verbrauchte, in der Regel mit Schmutzpartikeln und auch Schmiermitteln angereicherte Abluft in den Werkzeugkanal geleitet. Abgesehen davon, daß dies aus hygienischen Gründen höchst unerwünscht ist, hat eine solche Anordnung auch noch weitere Nachteile. So stellt sich die Pumpwirkung nur dann ein, wenn die Abluft voll zur Verfügung steht, d.h. wenn sich die Turbine ausreichend schnell dreht. Bei Stillstand des Werkzeuges oder auch bei verstopfter Austrittsöffnung am Werkzeug kann es sehr leicht vorkommen, daß das zugeführte Kühlmittel, in der Regel Wasser, nach oben in den eingangs erwähnten Raum gedrückt wird und so in die Lager gelangt.

Ein weiterer Nachteil einer solchen Ausführung ist darin zu sehen, daß die Anordnung nur für eine Drehrichtung des Werkzeuges geeignet ist. Bei einem Drehrichtungswechsel würde anstelle eines Pumpeffekts ein unerwünschter Saugeffekt entstehen.

Aus DE-2 331 023 ist eine Anordnung bekannt, bei der mit dem Einsetzen des Werkzeuges das Zuführungsrohr für das Kühlmittel in den Längskanal des Werkzeuges eintaucht. Ein im Werkzeug angeordneter Dichtring sorgt für eine Abdichtung des Kühlwassers gegen die übrigen Teile des Kopfgehäuses. Eine solche Ausführung hat den Nachteil, daß die Dichtung eine relativ hohe Reibung zwischen Werkzeug einerseits und feststehendem Zuführungsrohr andererseits erzeugt, wodurch die Lebensdauer des Werkzeuges vermindert wird. Eine derartige Kühlmittelübergabe ist außerdem nur für sehr niedrige Drehzahlen geeignet. Ein weiterer Nachteil ist darin zu sehen, daß das Instrument ausschließlich für innen gekühlte Bohrer verwendbar ist, wobei Bohrer und Instrument konstruktiv aufeinander abgestimmt sein müssen.

Aus US-PS 5 096 421 ist eine weitere Konstruktion bekannt, bei der die Übergabe des Kühlmittels im Druckdeckelbereich des Behandlungskopfes erfolgt, wobei in einer Kammer des Kopfgehäuses zwischen der Austrittsöffnung des Zuleitungskanals und der Eintrittsöffnung im Werkzeugschaft eine mit einer Bohrung versehene Membran eingespannt ist, die im Betrieb, also bei rotierendem Werkzeug, dichtend an der Stirnfläche des Werkzeugschaftes anliegt und so eine Abdichtung gegenüber dnr übrigen Gehäuseteilen, insbesondere der Lager für die Hohlwelle, bewirken soll.

Auch hier besteht der Nachteil, daß infolge der Reibung zwischen Bohrerschaft und Membran ein relativ hoher Verschleiß gegeben ist. Des weiteren ist keine ausreichend sichere Trennung des Kühlmittelweges von den benachbarten Kugellagern gegeben, wodurch es vorkommen kann, daß Kühlmittel in die Lager bzw. Öl aus den Lagern in den Längskanal des Werkzeuges gelangen kann.

Der im Anspruch 1 angegebenen Erfindung liegt die Aufgabe zugrunde, demgegenüber eine Verbesserung zu erzielen und ein ärztliches, insbesondere zahnärztliches Instrument der eingangs genannten Gattung anzugeben, bei dem unter Vermeidung der vorgenannten Nachteile, insbesondere von Reibung verursachenden und den Verschleiß unterworfenen Dichtungen eine optimale Übergabe des Kühlmittels auf das rotierende Werkzeug ermöglicht wird. Die Anordnung soll außerdem so gestaltet sein, daß das Instrument ohne konstruktive Änderung auch mit normalen, also nicht innen gekühlten Werkzeugen betrieben werden kann.

Die Erfindung fußt auf der Erkenntnis, durch die Anordnung geeigneter Dichtspalte mit Hilfe von sauberer Zuluft eine ausreichende Abdichtung sowohl zur Kühlmittelseite als auch zur Abluftseite bzw. zur Atmosphäre hin bei minimalem Luftverbrauch zu erzielen. Vorteilhafte Ausgestaltungen und Weiterbildungen der Erfindung ergeben sich aus den Unteransprüchen und der nachstehenden Beschreibung mehrerer Ausführungsbeispiele.
Es zeigen:
Figur 1 eine erste Ausführungsform nach der Erfindung,
Figuren 2 bis 5 weitere Ausführungsformen nach der Erfindung in einer Ausschnittdarstellung.

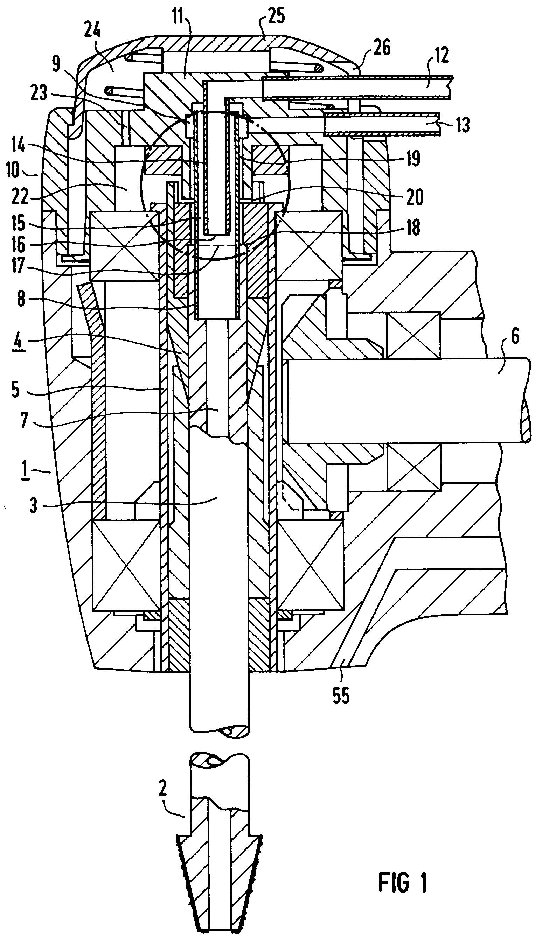

Die Figur 1 zeigt im Längsschnitt das Kopfgehäuse 1 eines zahnärztlichen Instruments, in dem ein Bohrwerkzeug 2 in bekannter Weise drehbar gelagert ist. Das Werkzeug 2 ist hierzu mit seinem Schaft 3 in einer nicht weiter erläuterten Spannvorrichtung 4 gehaltert, die wiederum in einer Hohlwelle 5 gefaßt ist, welche in bekannter Weise über nicht näher bezeichnete Getriebeteile von einer Antriebswelle 6 in Rotation versetzbar ist. Nachdem Antrieb und Lagerung der Hohlwelle sowie die Spannvorrichtung im Kopfgehäuse Stand der Technik sind, wird darauf verzichtet, diese Teile und deren Funktion näher zu beschreiben.

Das Werkzeug 2 enthält einen durchgehenden Längskanal 7, der im Bereich der Werkzeugspitze an geeigneter Stelle der aktiven Arbeitsflächen, im dargestellten Ausführungsbeispiel in Achsrichtung, ausmündet. Im Bereich des Schaftendes ist der Durchmesser des Längskanals etwas größer; in diesem vergrößerten Teil ist ein Röhrchen 8 eingesetzt, welches deutlich über das Schaftende des Werkzeuges 2 vorsteht und, wie aus der Zeichnung ersichtlich, im montierten Zustand in einen mit 9 bezeichneten Luftverteilerraum des Gehäuseoberteils 10 ragt. Das Röhrchen 8 ist Bestandteil des Werkzeuges 2 und kann entweder am Schaftende in 2 geeigneter Weise aufgesetzt oder auch integraler Bestandteil des Werkzeuges sein.

Das Gehäuseoberteil 10 enthält Gehäuseteile 11, in denen einerseits ein Kühlmittelleitungskanal 12 und andererseits ein Druckluftzufuhrkanal 13 geführt sind. Die Leitungen von den entsprechenden Druckmittelquellen zum Kopfgehäuse können sowohl extern als auch intern des des Instruments geführt sein. Über die Leitung 12 wird ein geeignetes Kühlmittel, vorzugsweise Wasser, an das Kopfgehäuse herangeführt. Die Zufuhrleitung endet in einem abgewinkelten Abschnitt 14, der, wie aus der Darstellung ersichtlich, zentrisch zur Werkzeugachse ausgerichtet ist und im montierten Zustand des Werkzeuges 2 vom Röhrchen 8 konzentrisch umgeben ist. Die Anordnung ist so getroffen, daß zwischen beiden Teilen ein relativ enger Spalt 15 mit relativ großer Länge gebildet ist, der, wie nachfolgend noch näher erläutert, eine Abdichtung mittels der zugeführten Druckluft zur Kühlmittelseite, also zur Wasserseite hin, bewirkt.

Die mit der nicht dargestellten Druckluftquelle verbundene Druckluftleitung 13 ist mit dem bereits erwähnten Luftverteilerraum 9 verbunden, der in den vorerwähnten Spalt 15 übergeht. Die Anordnung ist so getroffen, daß die mit 16 bezeichnete Austrittsöffnung der (gestrichelt angedeuteten) Eintrittsöffnung 17 des Längskanals 7 des Werkzeuges 2 bei nicht eingesetztem Röhrchen 8 in einem definierten Abstand von weniger als einem Millimeter korrespondierend gegenübersteht. Die Übernahme des Kühlmittels erfolgt somit berührungsfrei, und zwar sowohl mit als auch ohne aufgesetztem Röhrchen 8. Der Abstand ist durch einen Anschlag 18 in der Spannvorrichtung 4 festgelegt.

Die über die Leitung 13 zugeführte Druckluft dient, wie bereits erwähnt, als Dichtluft zur Abdichtung sowohl gegenüber dem Kühlmittel, also dem Wasser, als auch gegenüber der Abluft bzw. Atmosphäre. Der Verteilerraum 9 sorgt dabei für eine gleichmäßige Verteilung der Druckluft an die Dichtspalte. Die zunächst in den Verteilerraum 9 eingeleitete Druckluft wird zum einen Teil in den bereits erwähnten Spalt 15 geleitet und bildet dort eine ausreichende Dichtung gegenüber dem zugeführten Wasser. Der andere Teil der Druckluft wird in weitere Spalte 19 und 20 geleitet; dieser Luftanteil dient zur Abdichtung nach außen, also zur Atmosphäre hin. Die Entlüftung erfolgt über eine Kammer 22, einen Entlüftungskanal 23, einen Raum 24, welcher durch einen Gehäusedeckel 25 und den Gehäuseteilen 11 gebildet wird, und schließlich über Öffnungen 26. Anstelle der beschriebenen Entlüftungswege sind auch andere Wege denkbar, die überschüssige Dichtluft (Leckluft) abzuführen.

Der achsparallel verlaufende Spalt 19 ist relativ eng toleriert im Vergleich zum radialen Ringspalt 20. Durch Wahl eines relativ großen Spaltes am Ringspalt 20 läßt sich der an sich unerwünschte Pumpeffekt verringern.

In Verbindung mit der aufgezeigten Röhrchenanordnung, die eine drehachsennahe Übergabe des Kühlmittels auf das Werkzeug bei kleinsten Durchmessern vorsieht, ist eine sichere Medienübergabe ohne die vorerwähnten, beim Stand der Technik vorhandenen Nachteile gewährleistet.

Die vorgestellte Konstruktion erlaubt es, sowohl bei ein- als auch bei abgeschalteter Wasserzufuhr ein Werkzeug ohne Längskanal, also ein nicht innengekühltes Werkzeug, einzusetzen, ohne hierzu konstruktive Änderungen vornehmen zu müssen.

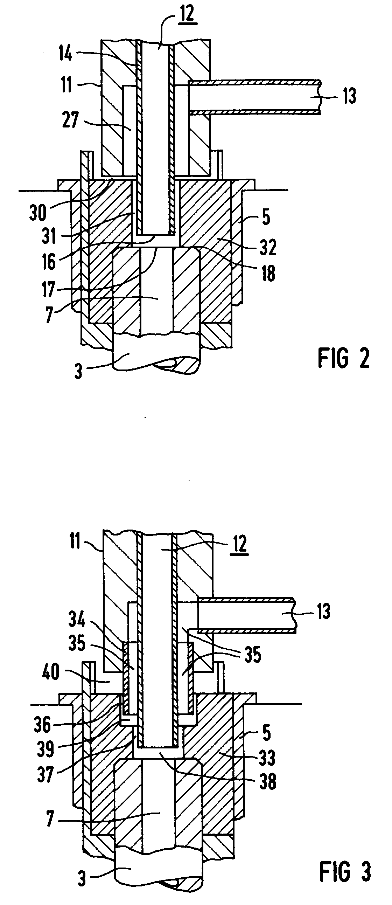

Die Figuren 2 bis 5 zeigen vorteilhafte Varianten der Erfindung, und zwar als Ausschnitt jeweils in dem in Figur 1 strichpunktiert angegebenen Bereich.

Bei der Ausführung nach Figur 2 hat der Schaft des Werkzeuges einen im Durchmesser gleichbleibenden Längskanal 7. Der Leitungsabschnitt des Zuleitungskanals 12 für das Kühlmittel endet unmittelbar oberhalb der Eintrittsöffnung 17 des Längskanals, so daß sich Austrittsöffnung 16 und Eintrittsöffnung 17 in einem geringen Abstand korrespondierend gegenüberstehen.

Die Druckluft wird auch hier zunächst in einen Verteilerraum 27 geleitet und beaufschlagt dann radiale und achsparallele Dichtspalte 30 und 31. Der radiale Dichtspalt 30 wird durch plane Stirnflächen des Gehäuseteils 11 und einer der Spannvorrichtung 4 zugeordneten Hülse 32 gebildet. Der achsparallele Spalt 31 ist auch hier relativ eng toleriert, so daß dem zugeführten Kühlmittel wenig Luft beigemischt wird.

Bei der Ausführungsform nach Figur 3 wird durch eine abgestufte Konstruktion der den Werkzeugschaft aufnehmenden Hülse 33, die in der Funktion der Hülse 32 in Figur 2 entspricht, und die Teil der mit der Hohlwelle 5 umlaufenden Spannvorrichtung 4 ist, in Verbindung mit einer mit den feststehenden Gehäuseteilen 11 verbundenen Hülse 34 eine noch bessere Luftdichtung zwischen den rotierenden und feststehenden Teilen erreicht. Während bei der Ausführung nach Figur 2 im wesentlichen plane Dichtflächen, die den Dichtspalt 30 bilden, vorgesehen sind, wird bei der Ausführung nach Figur 3 die Luftdichtung im wesentlichen durch Zylinderflächen gebildete enge Spalte an den mit 36 und 37 bezeichneten Stellen erreicht. Die Spalte im radialen Bereich, in der Figur mit 38, 39 und 40 bezeichnet, sind groß gewählt, wodurch die bereits angesprochene unerwünschte Pumpwirkung, die insbesondere bei sehr hohen Drehzahlen auftritt, vermieden wird. Die Zuführung der Druckluft erfolgt auch bei dieser Version über einen mit der Druckluftleitung 13 verbundenen Verteilerraum 35.

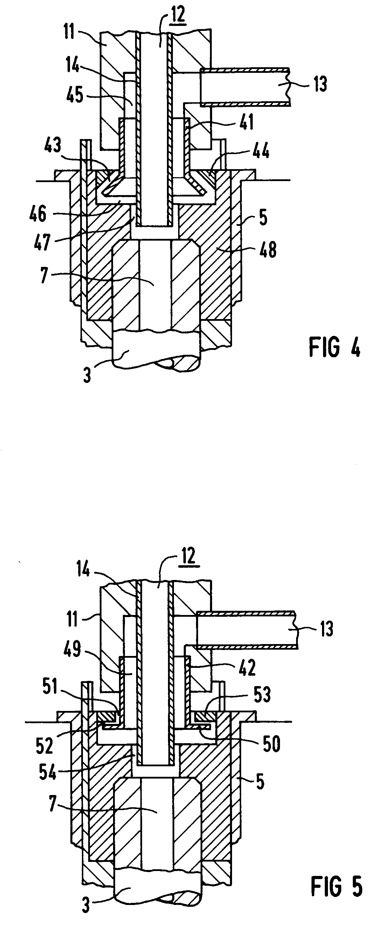

Die Figuren 4 und 5 zeigen Ausführungsformen, bei denen konzenrisch zum Zuleitungskanal 12 für das Kühlmittel Luftleithülsen 41, 42 vorgesehen sind, die der Eintrittsöffnung zugewandt so geformt sind, daß sich eine labyrinthartige Umlenkung der Dichtluft ergibt.

Bei der Ausführung nach Figur 4 weist die Luftleithülse 41 ein nach außen sich konisch erweiterndes Ende auf, dem unter Bildung eines engen Dichtspaltes 43 ein entsprechend ausgebildeter Ring 44 korrespondierend gegenübersteht. Der Ring ist Bestandteil des umlaufenden Systems, also der Spannvorrichtung 4. Die über die Druckluftleitung 13 zugeführte Luft tritt zunächst in einen relativ weiten Verteilerraum 45 ein und beaufschlagt dann einerseits über einen Radialspalt 46 den Dichtspalt 43 und andererseits den achsparallelen Spalt 47, welcher zwischen dem Ende des Abschnittes 14 der Zuführungsleitung 12 und einer in der Funktion der Hülse 33 in Figur 3 entsprechenden Hülse 48 gebildet ist. Bei der Ausführung nach Figur 5 weist die Luftleithülse 42 ein flanschartiges Ende 50 auf, dem unter Bildung von radialen und axialen Dichtspalten 51 und 52 ein ringförmiges Teil 53 gegenübersteht, welches wiederum Teil des rotierenden Systems ist. Auch hier dienen die Spalte 51 und 52 zur Abdichtung gegenüber der Außenluft und der Spalt 54 gegenüber dem zugeführten Kühlmittel. Der Verteilerraum ist hier mit 49 bezeichnet.

Die Ausführungen nach den Figuren 4 und 5 haben den Vorteil, daß aufgrund des Aufbaus der Luftdichtung ein höherer Gegendruck in den Dichtspalten erreicht wird. Bei der Version nach Figur 5 ist bewußt der Radialspalt 52 eng gewählt, um so eine Pumpwirkung in Richtung Druckluftzufuhr 13 und Verteilerraum 49 zu erreichen. Besonders vorteilhaft ist ein mehrstufiger Aufbau einer solchen labyrinthartigen Flansch- und Dichtspaltanordnung. Der Luftverbrauch zum Abdichten der Spalte läßt sich so noch weiter reduzieren.

Das zugeführte Kühlmittel, also hier Wasser, kann mit der Druckluftversorgung für die Dichtluft parallel geschaltet sein. Besonders vorteilhaft ist es, wenn das Einschalten des Kühlmittels in Abhängigkeit von der Druckluft für die Abdichtung der Spalte erfolgt. Diese druckluftabhängigen Schaltmittel sind vorteilhafterweise im Instrument angeordnet. Die Schaltmittel können ein Membranschaltventil beinhalten, welches beispielsweise durch Druckänderung beim Einsetzen des Werkzeuges geschaltet wird, wodurch die Möglichkeit gegeben ist, das Instrument zu betreiben, ohne daß dabei die Innenteile im Kopfgehäuse, insbesondere die Spannzangenteile, durch austretendes Kühlwasser benetzt werden. Eine solche Möglichkeit ist beispielsweise bei der Version nach Figur 1 gegeben.

Nachdem es bei zahnärztlichen Instrumenten üblich ist, Werkzeuge auch von außen mit Kühlwasser und Kühlluft bzw. mit einem Wasser/Luft-Gemisch (Spray) zu besprühen, wozu im Bereich des Werkzeugaustritts am Kopfgehäuse ein entsprechender Austrittskanal vorgesehen ist (in Figur 1 mit Position 55 bezeichnet), kann es für spezielle Aufgaben von Vorteil sein, im Instrument Umschaltmittel vorzusehen, mit denen es möglich ist, die Wasserzufuhr wahlweise für eine Innen- oder Außenkühlung zu steuern, also beispielsweise alternativ die Zufuhrleitung 12 oder die Leitung 55 abzusperren. Dadurch wird es möglich, das Instrument wahlweise mit Innen- oder Außenkühlung oder auch mit Innenkühlung und einem außen zugeführten Spray zu betreiben.

## Patentansprüche

1. Ärztliches, insbesondere zahnärztliches, Instrument mit einer in einem Kopfgehäuse (1) gelagerten Hohlwelle (5) zur Aufnahme einer Spannvorrichtung (4) für ein innen gekühltes Werkzeug (2), welches einen Längskanal (7) aufweist, wobei dem Längskanal ein Zuleitungskanal (12) für ein Kühlmittel zugeordnet ist, dessen Austrittsöffnung (16) der Eintrittsöffnung (17) an der Stirnseite des Werkzeugschaftes berührungsfrei gegenübersteht und wobei weiterhin konzentrisch zum Zuleitungskanal des Kühlmittels ein weiterer Zuleitungskanal (13) vorgesehen ist, über den Druckluft mit einem gegenüber dem Kühlmittel höheren Druck zugeführt wird, wobei zwischen rotierenden Teilen (32, 33, 48) der Spannvorrichtung (4) am Schaftende des Werkzeuges und dem Zuleitungskanal (13) für Druckluft mit Druckluft beaufschlagbare, zur Abdichtung vorgesehene Spalte (15, 19, 20; 30, 31; 36, 37; 43, 47; 51, 52, 54) vorhanden sind.

2. Instrument nach Anspruch 1, bei dem die Mittel zur Erzielung der Spalte (15, 19, 20) ein den Werkzeugschaft (3) verlängerndes rohrförmiges Teil (8) beinhalten, welches den Endabschnitt des Zuleitungskanals (12) für das Kühlmittel konzentrisch umgibt und welches mit Gehäuseteilen (11) des Kopfgehäuses achsparallele und radiale Spalte, die mit Druckluft beaufschlagt werden, bildet.

3. Instrument nach Anspruch 2, bei dem auf das Schaftende des Werkzeuges ein Röhrchen (8) aufgesetzt ist, welches den Leitungsabschnitt (14) des Kühlmittelzuleitungskanals (12) konzentrisch umgibt.

4. Instrument nach Anspruch 1, bei dem der Leitungsabschnitt (14) des Zuleitungskanals (12) dicht benachbart dem Schaftende des Werkzeuges endet, wodurch die Austrittsöffnung (16) des Kühlmittelleitungsabschnittes zur Eintrittsöffnung (17) am Werkzeugschaftende einen definierten engen Abstand hat, und bei dem zwischen einer das Schaftende des Werkzeuges (2) fassenden Hülse (32, 33) der Spannvorrichtung (4) und dem Ende des Leitungsabschnittes (14) ein durch zylindrische Flächen gebildeter, mit Druckluft beaufschlagter Spalt (31, 36, 37) vorhanden ist, der in einen radialen Spalt (30, 38, 39, 40) übergeht, welcher über Entlüftungskammern und -kanäle (22, 23, 24, 26) mit der Atmosphäre in Verbindung steht.

5. Instrument nach Anspruch 4, bei dem die Spaltbreite des achsparallel verlaufenden Spaltes (36, 37) deutlich kleiner ist als die Spaltbreite des Radialspaltes (38, 39, 40).

6. Instrument nach Anspruch 1, bei dem die Mittel zur Erzielung der Spalte eine den Zuleitungskanal (12) für das Kühlmittel konzentrisch umgebende Luftleithülse (41, 42) beinhalten, welche der Eintrittsöffnung (17) zugewandt so geformt ist, daß sich eine labyrinthartige Umlenkung der abströmenden Druckluft ergibt.

7. Instrument nach Anspruch 6, bei dem die Luftleithülse (41) ein sich konisch nach außen erweiterndes Ende aufweist, dem unter Bildung der Dichtspalte (43) ein entsprechend ausgebildetes Teil (44) der Spannvorrichtung (4) zugeordnet ist.

8. Instrument nach Anspruch 6, bei dem die Luftleithülse (42) ein flanschartiges Ende (50) aufweist, dem unter Bildung von radialen und axialen Dichtspalten (51, 52) ein entsprechend ausgebildetes Teil (53) der Spannvorrichtung (4) zugeordnet ist.

9. Instrument nach einem der Ansprüche 1 bis 8, bei dem die Druckluft vor dem Eintritt in die Spalte (15, 19, 20; 31, 36, 37, 43, 47, 51, 54) in eine Verteilerkammer (9, 27, 35, 45, 49) geleitet wird.

10. Instrument nach einem der Ansprüche 1 bis 9, bei dem die Druckluft über ein Steuerventil zugeführt wird, welches parallel mit der Zufuhr des Kühlmittels geschaltet wird.

11. Instrument nach einem der Ansprüche 1 bis 10, bei dem im Zuleitungskanal des Kühlmittels ein Schaltventil angeordnet ist, mit dem die Zufuhr des Kühlmittels steuerbar ist.

12. Instrument nach Anspruch 11, bei dem zusätzlich zur Kühlmittelzufuhr über das innen gekühlte Werkzeug ein weiterer Zufuhrkanal (55) für ein Kühlmittel, welches von außen auf die Arbeitsfläche des Werkzeuges (2) gerichtet ist, vorhanden ist und bei dem ein Steuerventil vorhanden ist, mit dem wahlweise die Zufuhr des Kühlmittels zum einen (12) oder anderen (55) oder zu beiden Kanälen (12; 55) gesteuert werden kann.

13. Instrument nach Anspruch 12, bei dem als Steuerventil für das Kühlmittel ein mit der Druckluft geschaltetes Membranventil vorgesehen ist.

14. Instrument nach Anspruch 13, bei dem das Schalten des Steuerventils durch eine Druckerhöhung im Zuleitungskanal beim Einsetzen des Werkzeuges in die Spannvorrichtung erfolgt (Figur 1).

15. Instrument nach Anspruch 1, bei dem eine labyrinthartige Anordnung der Dichtspalte (51, 52) vorgesehen ist.

16. Instrument nach Anspruch 15, bei dem die Dichtspaltanordnung mehrstufig ist.
